# EUROPÄISCHE PATENTSCHRIFT

(11) **EP 2 462 423 B1**
(45) Veröffentlichungstag und Bekanntmachung des Hinweises auf die Patenterteilung: **21.09.2016**
(21) Anmeldenummer: 10736963.9
(22) Anmeldetag: 04.06.2010
(51) Int. Cl.: G01N 3/04, B23B 31/16, B23B 31/177

(54) **PROBENHALTER ZUM SPANNEN VON WERKSTÜCKEN**
SAMPLE HOLDER FOR CLAMPING WORKPIECES
PORTE-ÉCHANTILLON POUR LE SERRAGE DES PIÈCES

(30) Priorität: 05.08.2009 DE 102009036246
(43) Veröffentlichungstag der Anmeldung: 13.06.2012
(73) Patentinhaber: Zwick GmbH & Co. Kg, 89079 Ulm (DE)
(72) Erfinder: GANSER, Franz, 88471 Laupheim (DE)
(74) Vertreter: Dziewior, Joachim
(86) Internationale Anmeldenummer: PCT/DE2010/000640
(87) Internationale Veröffentlichungsnummer: WO 2011/015167

(56) Entgegenhaltungen:
- DE-A1- 19 816 639
- DE-A1- 19 926 408
- US-A- 2 660 440
- US-A- 3 908 449
- US-A- 4 019 378

## Beschreibung

Die Erfindung betrifft einen Probenhalter zum Spannen von Werkstücken, insbesondere für die Durchführung von Bauteil- und Werkstoffprüfungen in Form von Druck- und insbesondere Zugversuchen, mit zwei vorzugsweise durch hydraulische Spannzylinder verfahrbaren, koaxial zueinander ausgerichteten und das Werkstück zwischen sich spannenden Spannbacken, die auf ihrer dem Werkstück abgewandten Seite mit Keilflächen versehen sind, die einem Keilstück anliegen, dass über einen ebenfalls fluidbetriebenen Synchronisationszylinder senkrecht zur Achse der Spannbacken und in Richtung der Prüfachse des Werkstücks verfahrbar ist.

Beim Spannen von Werkstücken, die anschließend insbesondere Zugversuchen unterworfen werden sollen, ist es zum einen entscheidend, die Einspannung zentrisch, also in der eigentlichen Meßachse vorzunehmen, zum anderen sollten die Werkstücke über eine ausreichende Länge zwischen den Spannbacken eingespannt sein, um Kippmomente der Spannbacken, wie sie bei kurz eingespannten Proben auftreten können, möglichst zu vermeiden. Häufig ist jedoch aufgrund der Probengeometrie ein Einspannen über einen ausreichend langen Weg nicht möglich. Dies bedeutet, daß oftmals aufwendige Maßnahmen vorgesehen werden müssen, um sicherzustellen, dass die Spannbacken symmetrisch schließen.

DE 199 26 408 A1 offenbart einen Spannkopf für eine Zugkraftmaschine zur Probeneinspannung, wobei 4/2-Wegeventile die Spannbacken steuern.

Aus der US 3 906 449 A ist ein derartiger Probenhalter bekannt, bei welchem der - bezüglich der Bewegungsrichtung der Spannzylinder - feststehende und zur Messachse zentrisch ausgerichtete Synchronisationszylinder mit dem Keilstück dafür sorgt, dass die beiden Spannbacken symmetrisch zueinander schließen. Der Synchronisationszylinder erzeugt einen Gegendruck zur Aufrechterhaltung der Sychronisation durch das Keilstück, fährt aber zurück, um den beiden Spannbacken den Weg in Richtung Schließstellung freizugeben.

Das in den Spannbackenführungen üblicherweise vorhandene Spiel kann durch den senkrecht angeordneten Synchronisationszylinder mit dem Keilstück eliminiert wird. Dadurch sind insbesondere auch Wechsellastversuche möglich, ohne dass die dabei üblichen Wegsprünge auftreten. Dabei ist die gesamte Anordnung robust gegen Überlastungen, da im Falle einer Überlast der Synchronisationszylinder einfach weggedrückt wird, so dass beim Entlasten die Synchronisation wieder hergestellt wird.

Der Erfindung liegt die Aufgabe zugrunde, einen Probenhalter der eingangs genannten Art zu schaffen, bei welchem nicht nur sichergestellt ist, dass die Spannbacken symmetrisch zur Messachse schließen und dabei auch kurze Proben gespannt werden können, ohne dass Kippmomente auf die Spannbackenführungen gebracht werden, sondern auch eine gleichmäßige Kraftbeaufschlagung beim Spannen und Entlasten der Probe erreicht wird.

Diese Aufgabe wird nach der Erfindung gemäß des Gegenstands des Anspruchs 1 dadurch gelöst, dass die beiden Spannzylinder über eine gemeinsame Zuleitung sowie über ein 4/2-Wegeventil aus einem Fluidreservoir gespeist werden, wobei der Synchronisationszylinder über ein einstellbares erstes Druckbegrenzungsventil sowie ein parallel angeordnetes Rückschlagventil an das 2/4-Wegeventil angeschlossen ist.

Der durch die Erfindung erreichte Vorteil besteht zunächst darin, dass hierdurch die beiden Spannzylinder im Wesentlichen gleichmäßig verstellt werden, wobei bauart- und reibungsbedingte Umsymmetrien durch den Synchronisationszylinder ausgeglichen werden. Beim Schließen der Spannzylinder wird der Synchronisationszylinder soweit entspannt, daß zwar ein leichter Gegendruck zur Aufrechterhaltung der Sychronisation durch das Keilstück erhalten bleibt, gleichwohl aber das Keilstück zurückfährt und den beiden Spannbacken den Weg in Richtung Schließstellung freigibt. Im Ergebnis ergibt sich hierbei eine ähnliche Betriebsweise wie bei einem doppelwirkenden Zylinder, der von einem 4/2- oder 5/2-Wegeventil angesteuert wird, wobei der Hub in der einen Richtung - also beim Spannen - unter voller Kraft fährt, während der Rückhub unter Niederdruck durchgeführt werden kann. Beim Rückfahren wird damit das Druckbegrenzungsventil mittels des parallel geschalteten Rückschlagventils entlastet.

Insbesondere beim Einspannen von kurzen Proben wird der Synchronisationszylinder definiert entlastet, so dass er über das Keilstück einen bestimmten, festlegbaren Gegendruck auf die Spannbacken ausübt, wobei dieser Gegendruck in Korrelation zu dem Spanndruck der Spannbacken stehen sollte, so dass die sonst auftretenden Kippmomente gerade kompensiert werden. Der gesamte Vorgang des Probenspannens ist hierbei unabhängig von der Probendicke und während des gesamten Schließ- und Spannvorgangs dynamisch.

Ferner kann vor dem 4/2-Wegeventil ein weiteres, direkt mit dem Fluidreservoir in Verbindung stehenes zweites Druckbegrenzungsventil vorgesehen sein, über das der auf die Spannbacken wirkende Anpressdruck geregelt einstellbar ist.

Eine weitere, durch die Erfindung gegebene Möglichkeit besteht darin, dass die beiden Druckbegrenzungsventile in einem zueinander festen Druckverhältnis einstellbar sind. Hierdurch lässt sich eine auch bei unterschiedlichen Einspannbedingungen günstige Kraftverteilung zwischen den Spannbacken einerseits und dem Synchronisationszylinder andrerseits einstellen.

Der Winkel, unter dem sich die Spannbacken und das Keilstück einander anliegen, kann je nach Anwendungsfall unterschiedlich gewählt werden; im Rahmen der Erfindung hat es sich jedenfalls für universelle Anwendungen als vorteilhaft erwiesen, wenn der Winkel, unter dem sich die Keilflächen der Spannbacken und das Keilstück anliegen, 45° beträgt.

Im folgenden wird die Erfindung an einem in der Zeichnung dargestellten Ausführungsbeispiel näher erläutert; es zeigen:
- Fig. 1: eine schematische Darstellung des Probenhalters zusammen mit der ihn ansteuernden Hydraulik,
- Fig. 2: eine beispielhafte Darstellung für die Probenhalterverformung beim Spannvorgang.

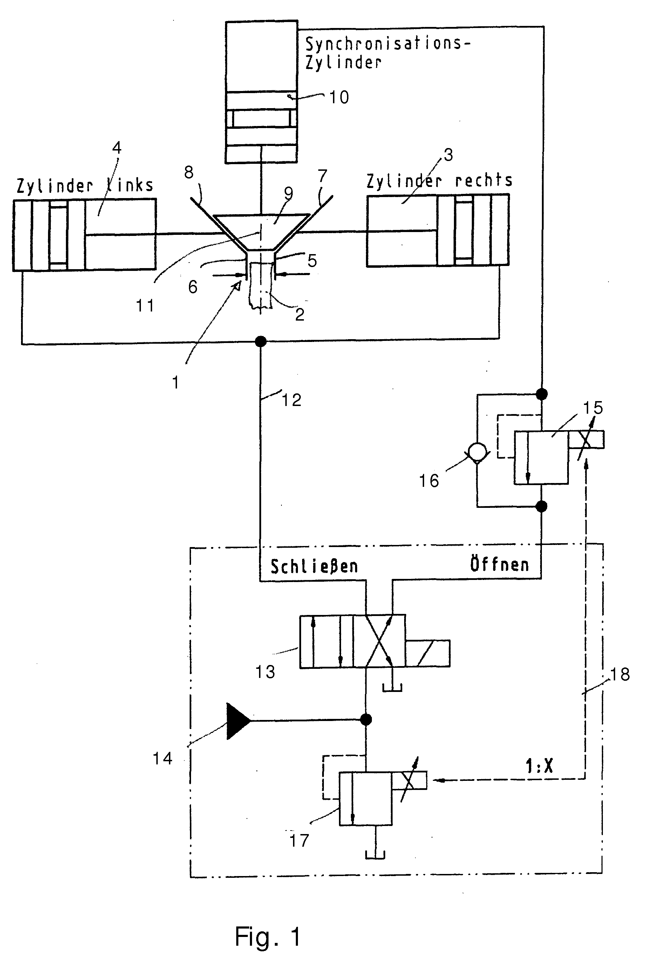

Der in der Zeichnung insbesondere in Figur 1 dargestellte Probenhalter 1 dient zum Spannen von Werkstücken 2, insbesondere für die Durchführung von Bauteil- und Werkstoffprüfungen in Form von Druck- und insbesondere Zugversuchen.

Der Probenhalter 1 besteht dazu aus zwei vorzugsweise durch hydraulische Spannzylinder 3,4 verfahrbaren und koaxial zueinander ausgerichteten Spannbacken 5,6, die das Werkstück 2 zwischen sich spannen.

Die beiden Spannbacken 5,6 sind auf ihrer dem Werkstück abgewandten Seite mit Keilflächen 7,8 versehen, die einem Keilstück 9 anliegen. Dieses Keilstück 9 ist über einen ebenfalls fluidbetriebenen Synchronisationszylinder 10 senkrecht zur Achse der Spannbacken und somit in Richtung der Prüfachse 11 des Werkstücks 2 verfahrbar.

Die im Einzelnen noch zu beschreibende und in Figur 1 dargestellte Hydraulik sorgt dafür, dass das Keilstück 9 und die Spannbacken 5,6 in der Regel in gegenseitiger Anlage bleiben. Dies bedeutet, dass beim Zufahren der Spannbacken 5,6 zur Spannung des Werkstücks 2 das Keilstück 9 in Richtung des Synchronisationszylinders 10 zurück fährt, während zum Öffnen der Spannbacken 5,6 das Keilstück 9 entsprechend in entgegengesetzter Richtung ausgefahren wird und damit die Spannbacken 5,6 auseinander drückt.

Um diesen Bewegungsablauf sicherzustellen, werden die beiden Spannzylinder 3,4 über eine gemeinsame Zuleitung 12 sowie über ein 4/2-Wegeventil 13 aus einem Fluidreservoir 14 gespeist, wobei der Synchronisationszylinder 10 - über ein einstellbares erstes Druckbegrenzungsventil 15 sowie ein parallel angeordnetes Rückschlagventil 16 - ebenfalls an das 4/2-Wegeventil 13 angeschlossen ist.

Im Ergebnis verhält sich diese Anordnung daher ähnlich einem doppeltwirkenden Zylinder, der in gleicher Weise durch ein 4/2-Wegeventil angesteuert wird.

Das in der Zuleitung zum Synchronisationszylinder 10 angeordnete Druckbegrenzungsventil 15 zusammen mit dem Rückschlagventil 16 ermöglicht eine Betriebsweise, bei der der Spannvorgang mit voller Kraft erfolgt, während der Rückhub unter Niederdruck durchgeführt wird. Beim Rückhub wird dabei das Druckregelventil 15 über das parallel geschaltete Rückschlagventil 16 entlastet.

Um den Anpressdruck der Spannbacken 5,6 einstellen zu können, ist vor dem 4/2-Wegeventil 13 ein weiteres, direkt mit dem Fluidreservoir 14 in Verbindung stehendes zweites Druckbegrenzungsventil 17 vorgesehen, über das der Druck in der Hydraulikleitung einstellbar ist.

Weiter besteht die Möglichkeit, die beiden Druckbegrenzungsventile 15,17 in einem zueinander festen Druckverhältnis einstellbar zu machen, was in der Figur 1 durch den gestrichelten Doppelpfeil 18 angedeutet ist.

In dem Ausführungsbeispiel nach Figur 1 ist der Winkel, unter dem sich die Keilflächen 7,8 der Spannbacken 5,6 und das Keilstück 9 anliegen, mit 45° gewählt; grundsätzlich besteht jedoch auch die Möglichkeit, hier andere, sowohl größere als auch kleinere Winkel vorzusehen.

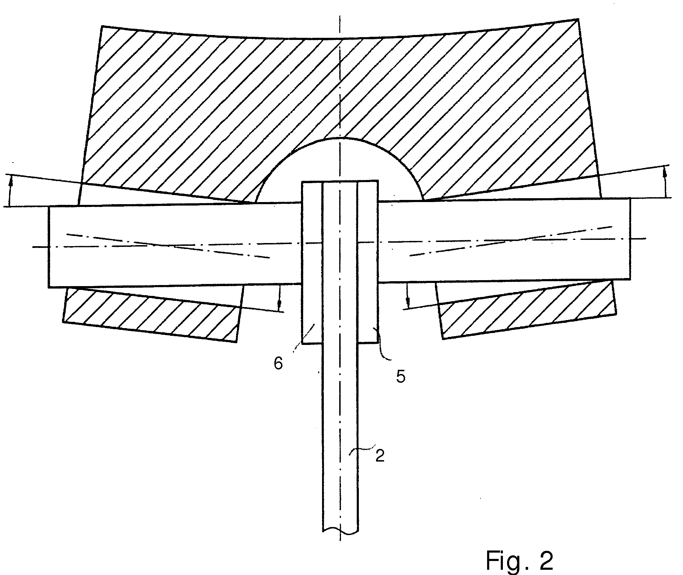

Durch diese Spannvorrichtung wird zum einen erreicht, dass die beiden Spannbacken 5,6 stets symmetrisch schließen, so dass eine automatische Ausrichtung des Werkstücks 2 zur Meßachse 11 sichergestellt ist. Weiter werden insbesondere bei Wechsellastversuchen üblicherweise auftretende Wegsprünge vermieden, die dadurch auftreten, dass aufgrund der Probenhalterverformung beim Spannvorgang und dem stets vorhandenen Spiel der Spannbackenführungen eine Kippbewegung der Spannbacken 5,6 erfolgt, wie dies in überzeichneter Weise in der Figur 2 dargestellt ist. Damit besteht insbesondere auch die Möglichkeit, extrem kurze Proben zu spannen, da das unter dem Druck des Synchronisationszylinders stehende Keilstück 9 die erforderliche Gegenkraft aufbringt, die ein Kippmonemt auf die Spannbackenführungen verhindert.

## Patentansprüche

1. Probenhalter zum Spannen von Werkstücken, insbesondere für die Durchführung von Bauteil- und Werkstoffprüfungen in Form von Druck- und insbesondere Zugversuchen, mit zwei vorzugsweise durch hydraulische Spannzylinder (3,4) verfahrbaren, koaxial zueinander ausgerichteten und das Werkstück (2) zwischen sich spannenden Spannbacken (5,6), die auf ihrer dem Werkstück (2) abgewandten Seite mit Keilflächen (7,8) versehen sind, die einem Keilstück (9) anliegen, das über einen ebenfalls fluidbetriebenen Synchronisationszylinder (10) senkrecht zur Achse der Spannbacken (5,6) und in Richtung der Prüfachse (11) des Werkstücks (2) verfahrbar ist, **dadurch gekennzeichnet, daß** die beiden Spannzylinder (3,4) über eine gemeinsame Zuleitung (12) sowie über ein 4/2-Wegeventil (13) aus einem Fluidreservoir (14) gespeist werden, wobei der
Synchronisationszylinder (10) über ein einstellbares erstes Druckbegrenzungsventil (15) sowie ein parallel angeordnetes Rückschlagventil (16) an das 4/2-Wegeventil (13) angeschlossen ist.

2. Probenhalter nach Anspruch 1, **dadurch gekennzeichnet, daß** vor dem 4/2-Wegeventil (13) ein weiteres, direkt mit dem Fluidreservoir (14) in Verbindung stehendes zweites Druckbegrenzungsventil (17) vorgesehen ist.

3. Probenhalter nach Anspruch 2, **dadurch gekennzeichnet, daß** die beiden Druckbegrenzungsventile (15,17) in einem zueinander festen Druckverhältnis einstellbar sind.

4. Probenhalter nach einem der Ansprüche 1 bis 3, **dadurch gekennzeichnet, daß** der Winkel, unter dem sich die Keilflächen (7,8) der Spannbacken (5,6) und das Keilstück (9) anliegen, 45° beträgt.

## Claims

1. A specimen holder for clamping workpieces, in particular for carrying out component and material tests in the form of compressive and in particular tensile tests, comprising two clamping jaws (5, 6) which are preferably displaceable by hydraulic clamping cylinders (3, 4) and are oriented coaxially relative to each other and clamp the workpiece (2) between them and are provided on their side remote from the workpiece (2) with wedge surfaces (7, 8) which bear against a wedge portion (9) which is displaceable by way of an also fluid-operated synchronisation cylinder (10) perpendicularly to the axis of the clamping jaws (5, 6) and in the direction of the test axis (11) of the workpiece (2), **characterised in that** the two clamping cylinders (3, 4) are fed from a fluid reservoir (14) by way of a common supply line (12) and by way of a 4/2 directional control valve (13), wherein the synchronisation cylinder (10) is connected to the 4/2 directional control valve (13) by way of an adjustable first pressure limiting valve (15) and a non-return valve (16) arranged in parallel.

2. A specimen holder according to claim 1 **characterised in that** provided upstream of the 4/2 directional control valve (13) is a further second pressure limiting valve (17) directly in communication with the fluid reservoir (14).

3. A specimen holder according to claim 2 **characterised in that** the two pressure limiting valves (15, 17) are adjustable in a pressure ration which is fixed relative to each other.

4. A specimen holder according to one of claims 1 to 3 **characterised in that** the angle at which the wedge surfaces (7, 8) of the clamping jaws (5, 6) and the wedge portion (9) are in contact is 45°.

## Revendications

1. Porte-échantillon pour le serrage de pièces, en particulier pour la réalisation d'essais d'éléments de construction et de matériaux sous forme d'essais de compression et notamment de traction, comprenant deux mors de serrage (5, 6) qui peuvent être déplacés de préférence par des vérins de serrage (3, 4) hydrauliques, sont orientés co-axialement l'un par rapport à l'autre et serrent la pièce (2) entre eux et qui sont pourvus, sur leur côté opposé à la pièce (2), de surfaces de clavette (7, 8) qui sont appliquées contre une clavette (9), laquelle peut être déplacée par un vérin de synchronisation (10) également actionné par un fluide, perpendiculairement à l'axe des mors de serrage (5, 6) et dans le sens de l'axe d'essai (11) de la pièce (2), **caractérisé en ce que** les deux vérins de serrage (3, 4) sont alimentés par une conduite d'amenée (12) commune ainsi que par un distributeur 4/2 (13), à partir d'un réservoir de fluide (14), sachant que le vérin de synchronisation (10) est raccordé au distributeur 4/2 (13) par l'intermédiaire d'une première soupape de limitation de pression (15) réglable, ainsi que par l'intermédiaire d'un clapet anti-retour (16) monté en parallèle.

2. Porte-échantillon selon la revendication 1, **caractérisé en ce qu'**en amont du distributeur 4/2 (13), il est prévu une deuxième soupape de limitation de pression (17) supplémentaire qui communique directement avec le réservoir de fluide (14).

3. Porte-échantillon selon la revendication 2, **caractérisé en ce que** les deux soupapes de limitation de pression (15, 17) peuvent être réglées dans un rapport de pression réciproque fixe.

4. Porte-échantillon selon l'une des revendications 1 à 3, **caractérisé en ce que** l'angle sous lequel les surfaces de clavette (7, 8) des mors de serrage (5, 6) et la clavette (9) sont appliquées les uns contre les autres est de 45°.
